# EUROPÄISCHE PATENTSCHRIFT

(11) **EP 1 101 192 B1**
(45) Veröffentlichungstag und Bekanntmachung des Hinweises auf die Patenterteilung: **29.05.2002**
(21) Anmeldenummer: 99938359.9
(22) Anmeldetag: 27.07.1999
(51) Int. Cl.: G06K 19/07

(54) **DATENTRÄGER MIT REGELUNG DER LEISTUNGSAUFNAHME**
DATA CARRIER WITH POWER INPUT CONTROL
SUPPORT DE DONNEES AVEC REGLAGE DE LA PUISSANCE ABSORBEE

(30) Priorität: 29.07.1998 EP 98114198
(43) Veröffentlichungstag der Anmeldung: 23.05.2001
(73) Patentinhaber: Infineon Technologies AG, 81669 München (DE)
(72) Erfinder: SEDLAK, Holger, D-85658 Egmating (DE); REINER, Robert, D-85579 Neubiberg (DE)
(74) Vertreter: Hermann, Uwe, Dipl.-Ing.
(86) Internationale Anmeldenummer: EP9905392
(87) Internationale Veröffentlichungsnummer: WO0007141

(56) Entgegenhaltungen:
- EP-A- 0 701 222
- EP-A- 0 813 303

## Beschreibung

Die Erfindung betrifft einen Datenträger, insbesondere eine Chipkarte, mit zumindest einer Sende/Empfangsantenne sowie einer dieser nachgeschalteten Gleichrichterschaltung zum Bereitstellen einer Versorgungsspannung für zumindest eine Schaltungseinheit. Ein solcher Datenträger ist aud EP 0 813 303, aus EP 0 701 222 und aus WO 97/08651 bekannt. Aus WO 97/08651 ist weiter bekannt, daß den Versorgungsspannungsklemmen der Schaltungseinheit(en) ein Spannungsregler parallel geschaltet ist.

Bei diesem aus der WO 97/08651 bekannten Datenträger handelt es sich um eine kombinierte Chipkarte, deren interne elektronische Schaltungen sowohl über ein Kontaktfeld als auch über eine integrierte Spule betrieben werden können. Im Kontaktlos-Betrieb über die Antennenspule wird die zum Betreiben der internen Schaltungen nötige Energie durch das von der Spule empfangene elektromagnetische Feld geliefert. Die zur Verfügung stehende Energie schwankt dabei sehr stark, da sie wesentlich vom Abstand des Datenträgers beziehungsweise der Chipkarte von einer die Energie liefernden Schreib/Lesestation abhängt.

Dies stellt ein Problem dar, da zu jeder Zeit für eine gewünschte Funktion des Datenträgers die nötige Energie zur Verfügung stehen muß. Gut entwickelte Schaltungen beenden ihre Funktion, bevor die Energieversorgung sich soweit verschlechtert, daß Fehlfunktionen auftreten können.

Die Schaltungen eines kontaktlosen Datenträgers werden üblicherweise so entworfen, daß sie bei einer geforderten maximalen Reichweite mit der angebotenen Leistung auskommen. Bei geringerem Abstand des Datenträgers beziehungsweise der Chipkarte zur Schreib/Lesestation steht dann allerdings eine Überschußleistung zur Verfügung, die vom Parallelspannungsregler aufgenommen wird und damit nutzlos verloren geht.

Die Aufgabe vorliegender Erfindung ist es, einen gattungsgemäßen Datenträger so weiterzubilden, daß er möglichst optimal an das aktuelle Leistungsangebot angepaßt ist.

Die Aufgabe wird bei einem gattungsgemäßen Datenträger dadurch gelöst, daß der Spannungsregler einen Ausgang aufweist, an dem ein dem Regelsignal des Spannungsreglers proportionales Signal abgreifbar ist, und daß dieser Ausgang mit dem Steuereingang eines steuerbaren Taktsignalgenerators verbunden ist, der das Taktsignal für die zumindest eine Schaltungseinheit bereitstellt. Vorteilhafte Weiterbildungen sind in den Unteransprüchen angegeben.

Der Erfindung liegt die Erkenntnis zugrunde, daß die Leistungsaufnahme elektrischer beziehungsweise elektronischer Schaltkreise von der Taktfrequenz abhängt, insbesondere mit zunehmender Taktfrequenz zunimmt. In erfindungsgemäßer Weise ist der Taktsignalgenerator steuerbar ausgebildet, so daß durch ein Steuersignal die Frequenz des Taktsignals verändert werden kann. Das Steuersignal wird aus dem Regelsignal des Parallelreglers gewonnen. Insbesondere wird ein dem Überschußstrom proportionales Signal als Maß für die Steuerung der Taktsignalfrequenz benutzt. Dies kann in vorteilhafter Weise mittels einer Stromspiegelschaltung erfolgen. Der Taktsignalgenerator ist in einer vorteilhaften Ausbildung der Erfindung als spannungsgesteuerter Oszillator realisiert.

Die Erfindung wird nachfolgend anhand eines Ausführungsbeispiels mit Hilfe einer Figur näher erläutert.

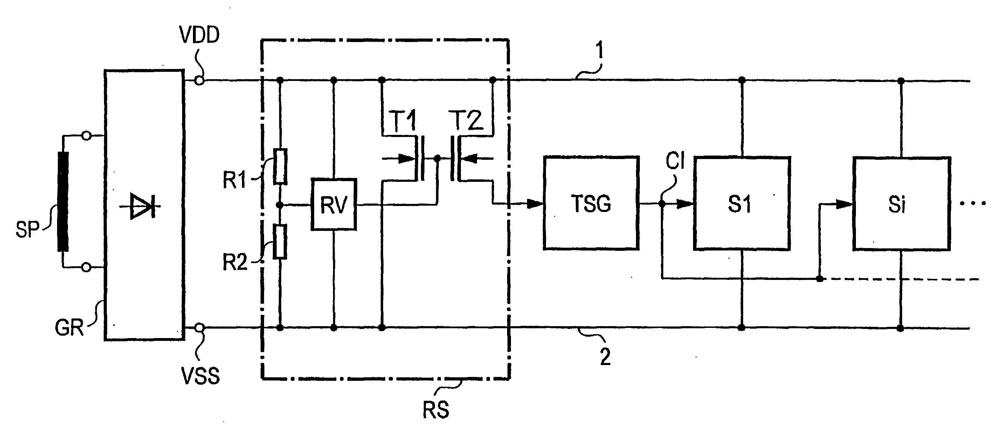

Die Figur zeigt in einer Prinzipdarstellung die für die Erfindung wesentlichen Teile eines erfindungsgemäßen Datenträgers, der insbesondere als Chipkarte ausgebildet sein kann.

Zum Empfangen von Energie und zum Datenaustausch ist eine Antennenspule SP vorgesehen, deren Enden mit einer Gleichrichterschaltung GR verbunden sind. Die Gleichrichterschaltung GR liefert an ihren Ausgangsklemmen die Versorgungsspannungen VDD, VSS für die an den Versorgungsspannungsleitungen 1, 2 liegenden Schaltkreise S1, Si. Das Zeichen "i" steht hierbei für eine Zahl zwischen 2 und n, je nachdem, wie viele Schaltkreise im Datenträger vorgesehen sind. Zur Stabilisierung der von der Gleichrichterschaltung GR gelieferten Versorgungsspannungen VDD, VSS ist parallel zu den Schaltkreisen S1, Si eine Regelschaltung RS geschaltet.

Diese Regelschaltung RS ist im dargestellten Beispiel mit einem als Spannungsdetektor wirkenden Spannungsteiler R1, R2 gebildet, dessen Mittelanzapfung über einen Regelverstärker RV mit dem Gateanschluß eines zwischen den Versorgungsspannungen VDD, VSS liegenden ersten Transistors T1 verbunden ist. Bei zunehmender Versorgungsspannung wird der erste Transistor T1 aufgesteuert, so daß ein größerer Stromanteil durch den ersten Transistor T1 abgeleitet wird. Auf diese Weise wird die Versorgungsspannung VDD auf einem konstanten Wert gehalten.

Die Regelschaltung RS kann in Weiterbildung auch einen - nicht dargestellten - Schwellwertdetektor enthalten, der erkennt, wenn die Versorgungsspannung VDD unter einem minimal erlaubten Wert abfällt und ein Signal abgibt, durch das alle Schaltungen S1, Si abgeschaltet werden.

Der in der Figur dargestellte erfindungsgemäße Datenträger weist desweiteren einen steuerbar ausgebildeten Taktsignalgenerator TSG auf, so daß die Frequenz des an seinem Ausgang bereitgestellten Taktsignals Cl vom Pegel des an seinem Steuereingang anliegenden Steuersignals abhängt.

Dieses Steuersignal ist nun in erfindungsgemäßer Weise proportional dem Regelsignal der Regelschaltung RS. Im dargestellten Beispiel ist hierzu der erste Transistor T1 als Teil einer Stromspiegelschaltung ausgebildet. Ein zweiter Transistor T2 dieser Stromspiegelschaltung liefert ein dem durch den ersten Transistor T1 fließenden Überschußstrom proportionales Signal an seinem Drainanschluß. Dieses Signal wird dem Taktsignalgenerator TSG zugeführt, indem der Drainanschluß des zweiten Transistors T2 mit dem Steuereingang des Taktsignalgenerators TSG verbunden ist.

Die Erfindung ist nicht auf das dargestellte Ausführungsbeispiel beschränkt. So kann zum Empfangen der nötigen Energie beziehungsweise zum Datenaustausch statt der dargestellten Antennenspule SP jede beliebige geeignete Antenne verwendet werden. Insbesondere sind auch Mikrowellenantennen denkbar.

Statt der dargestellten einfachen Regelschaltung RS kann jede dem Fachmann geläufige und für den gewünschten Zweck als geeignet erscheinende Parallelregelschaltung genommen werden.

Die Schaltkreise S1, Si können beispielsweise Prozessoren oder andere logische Schaltungen sowie beliebige Arten von Speichern sein. Insbesondere können alle Schaltungen auf einem einzigen Halbleiterchip integriert sein. Es ist aber auch denkbar, die Schaltungen auf mehrere Chips zu verteilen.

## Patentansprüche

1. Datenträger, insbesondere Chipkarte, mit zumindest einer Sende/Empfangsantenne (SP) sowie einer dieser nachgeschalteten Gleichrichterschaltung (GR) zum Bereitstellen einer Versorgungsspannung (VDD, VSS) für zumindest eine Schaltungseinheit (S1, Si), wobei den Versorgungsspannungsklemmen der Schaltungseinheit(en) (S1, Si) eine Spannungsregelschaltung (RS) parallelgeschaltet ist,
**dadurch gekennzeichnet,**
**daß** die Spannungsregelschaltung (RS) einen Ausgang aufweist, an dem ein dem Regelsignal der Spannungsregelschaltung (RS) proportionales Signal abgreifbar ist,
und **daß** dieser Ausgang mit dem Steuereingang eines steuerbaren Taktsignalgenerators (TSG) verbunden ist, der ein Taktsignal (Cl) für die zumindest eine Schaltungseinheit (S1, Si) bereitstellt.

2. Datenträger nach Anspruch 1,
**dadurch gekennzeichnet,**
**daß** die Spannungsregelschaltung (RS) mit einem zwischen den Versorgungsspannungsklemmen liegenden ersten Transistor (T1) gebildet ist, der mit einem zweiten Transistor (T2) eine Stromspiegelschaltung bildet, deren Ausgangsanschluß mit dem Steuereingang des Taktsignalgenerators (TSG) verbunden ist.

3. Datenträger nach Anspruch 1 oder 2,
**dadurch gekennzeichnet,**
**daß** der Taktsignalgenerator (TSG) ein spannungsgesteuerter Oszillator ist.

## Claims

1. Data carrier, in particular smart card, having at least one transmitting/receiving antenna (SP) and also a rectifier circuit (GR) connected downstream thereof and serving for providing a supply voltage (VDD, VSS) for at least one circuit unit (S1, Si), a voltage regulating circuit (RS) being connected in parallel with the supply voltage terminals of the circuit unit(s) (S1, Si),
**characterized**
**in that** the voltage regulating circuit (RS) has an output at which a signal proportional to the regulating signal of the voltage regulating circuit (RS) can be tapped off,
and **in that** the said output is connected to the control input of a controllable clock signal generator (TSG), which provides a clock signal (Cl) for the at least one circuit unit (S1, Si).

2. Data carrier according to Claim 1,
**characterized**
**in that** the voltage regulating circuit (RS) is formed with a first transistor (T1) connected between the supply voltage terminals, which first transistor forms, with a second transistor (T2), a current mirror circuit whose output terminal is connected to the control input of the clock signal generator (TSG).

3. Data carrier according to Claim 1 or 2,
**characterized**
**in that** the clock signal generator (TSG) is a voltage-controlled oscillator.

## Revendications

1. Support de données, notamment carte à puce, ayant au moins une antenne (SP) émission/réception, ainsi qu'un circuit (GR) redresseur monté en aval de celle-ci et destiné à mettre une tension (VDD, VSS) d'alimentation pour au moins une unité (S1, Si) de circuit, un circuit (RS) de régulation de la tension étant monté en parallèle aux bornes de la tension d'alimentation de l'unité (et d'unités) (S1, Si) de circuit,
**caractérisé,**
**en ce que** le circuit (RS) de régulation de la tension comporte une sortie à laquelle on peut prélever un signal proportionnel au signal de régulation du circuit (RS) de régulation de la tension,
et **en ce que** cette sortie est reliée à l'entrée de commande d'un générateur (TSG) de signal d'horloge, qui peut être commandé et qui met un signal (Cl) d'horloge à la disposition d'au moins une unité (S1, Si) de circuit.

2. Support de données suivant la revendication 1, **caractérisé en ce que** le circuit (RS) de régulation de la tension est formé par un premier transistor (T1) se trouvant entre les bornes de la tension d'alimentation et formant avec un deuxième transistor (T2) un circuit miroir de courant, dont la borne de sortie est reliée à la borne de commande du générateur (TSG) de signal d'horloge.

3. Support suivant la revendication 1 ou 2, **caractérisé en ce que** le générateur (TSG) de signal d'horloge est un oscillateur commandé en tension.
